# EUROPEAN PATENT SPECIFICATION

(11) **EP 3 994 067 B1**
(45) Date of publication and mention of the grant of the patent: **16.08.2023**
(21) Application number: 21777830.7
(22) Date of filing: 08.09.2021
(51) Int. Cl.: B65D 1/34, B32B 5/24, B65D 5/66, B65D 65/46, B05D 1/02

(54) **FOOD PACKAGING**
LEBENSMITTELVERPACKUNG
EMBALLAGE ALIMENTAIRE

(30) Priority: 09.09.2020 GB 202014191
(43) Date of publication of application: 11.05.2022
(73) Proprietor: BioPaxium Technologies Limited, Berkhamsted, Hertfordshire HP4 1EF (GB)
(72) Inventor: DAVIES, Peter, Berkhamsted, Hertfordshire HP4 1EF (GB)
(74) Representative: Appleyard Lees IP LLP
(86) International application number: PCT/GB2021/052318
(87) International publication number: WO 2022/053802

(56) References cited:
- WO-A1-2009/103052
- AU-A4- 2018 100 891
- CN-A- 1 195 720
- US-A1- 2010 044 267
- US-A1- 2020 095 731

## Description

### FIELD

The present invention relates to a method of manufacturing food packaging, food packaging manufactured by the method and an apparatus for manufacturing food packaging.

### BACKGROUND

Packaging used for food (food packaging) must meet several requirements. For example, food packaging must be impermeable to avoid food and/or liquids leaking from the packaging. Therefore, most food packaging comprises an impermeable coating applied to it during the manufacturing process to prevent leakage. Similarly, the coating must also exhibit barrier properties to prevent leaching of chemicals from the packaging to the food.

Typically, coatings for food packaging are applied by lamination. Most materials employed for lamination comprise plastics (e.g. Crystalline Polyethylene Terephthalate and Polyethylene Terephthalate). Consequently, though imparting the required property of impermeability and barrier properties, applying coatings by lamination typically increases waste and pollution, because food packaging that has been laminated is typically not recyclable or is more difficult to recycle compared with products not comprising plastics materials.

To reduce waste and pollution, in recent years a greater quantity of food packaging has been manufactured using only natural materials. The potential issue of permeability notwithstanding, many types of food packaging made from natural materials are not suitable for all the conditions to which food packaging is commonly exposed. For example, while starch-based food packaging formed by lamination may be easier to recycle compared with products comprising plastics materials, starch-based food packaging formed by lamination cannot withstand high temperatures. Therefore, starch-based food packaging formed by lamination is not typically suitable for use in regular ovens or microwave ovens. Food packaging is ideally required to be able to withstand the high temperatures required for cooking and also sub-zero temperatures associated with food being frozen for storage and/or transportation. Starch-based food packaging can also be formed from compressed powdered starch. However, food packaging formed from compressed powdered starch typically lacks rigidity, making it unsuitable for denser food, for example, and difficult to transport.

Furthermore, uncoated natural materials used in food packaging may be more susceptible to contamination by bacteria. For example, use of uncoated wood for food packaging typically poses challenges with respect to hygiene maintenance, because pores of the wood often harbour bacteria. On the other hand, materials such as metal and glass are too heavy and expensive to be useful for most food packaging.

Patent document US 2010/0044267 A1 describes a fully compostable container having an enclosed body with an opening through an interior surface and an exterior surface. Patent document CN 1 195 720 A describes a process for producing soluble and edible food and drink tableware. Patent document WO 2009/103052 A1 describes a method for forming biodegradable containers with increased flexibility and strength that can hold food products. Patent document AU 2018 100 891 A4 describes compostable tableware formed of a combination of rice husks or corn husk and a decomposable binder in the form a gelatinised starch. Patent document US 2020/0095731 A1 describes tunable methods of treating cellulosic materials with a barrier coating comprising at least two polyol and/or saccharide fatty acid ester.

Therefore, there is a need for food beverage packaging that is biodegradable, compostable, recyclable, cheap and light while simultaneously being impermeable, rigid and able to withstand a wide range of temperatures. There is, consequently, also a need for a method and apparatus for manufacturing such food packaging.

### SUMMARY

According to the present invention there is provided a method of manufacturing food packaging, food packaging manufactured by the method and an apparatus for manufacturing food packaging, as set forth in the appended claims. Other features of the invention will be apparent from the dependent claims, and the description that follows.

According to a first aspect, there is provided a method of manufacturing food packaging comprising a receptacle of a final shape and a coating. The method comprises fabricating the receptacle from raw materials, the raw materials comprising a fibrous material and a biopolymer; applying at least one layer of the coating to the receptacle, the coating comprising a biopolymer coating; and drying the at least one layer of the coating.

The fibrous material may comprise at least one of wood, sugar cane by-product, cassava fibre, tapioca fibre, potato fibre and recycled materials

The receptacle may comprise no more than 40% by mass of the fibrous material.

The biopolymer may comprise starch.

Fabricating the receptacle may comprise processing the raw materials and forming the final shape of the receptacle.

Processing the raw materials may comprise forming a web from the raw materials.

Processing the raw materials may comprise mixing pellets of the fibrous material and pellets of the biopolymer.

Forming the final shape of the receptacle comprises thermoforming.

The biopolymer coating may comprise a plant-based synthetic biopolymer.

Applying the at least of layer of the coating comprises spraying the receptacle using a Twin Air Spray System.

Drying the at least one layer of the coating may comprise curing the at least one layer of the coating.

According to a second aspect, there is provided food packaging manufactured according to the method.

The receptacle may be a cup.

The receptacle may comprise a formation to hold food.

According to a third aspect, there is provided an apparatus for manufacturing food packaging comprising a receptacle of a final shape and a coating. The apparatus comprises a forming machine to form the final shape of the receptacle from raw materials comprising a fibrous material and a biopolymer; a spray system to apply at least one layer of the coating to the receptacle, the coating comprising a biopolymer coating; and a dryer to dry the at least one layer of the coating.

### BRIEF DESCRIPTION OF DRAWINGS

For a better understanding of the invention, and to show how exemplary embodiments of the same may be brought into effect, reference will be made, by way of example only, to the accompanying diagrammatic Figures, in which:
Figure 1 schematically depicts a method of manufacturing food packaging according to an exemplary embodiment;
Figure 2 schematically depicts a receptacle of the food packaging according to an exemplary embodiment;
Figure 3 schematically depicts a step of fabricating the receptacle according to an exemplary embodiment;
Figure 4 schematically depicts a hammer mill used in the step of fabricating the receptacle according to an exemplary embodiment;
Figure 5A schematically depicts a forming machine used in the step of fabricating the receptacle according to an exemplary embodiment;
Figure 5B schematically depicts a forming machine used in the step of fabricating the receptacle according to an exemplary embodiment;
Figure 5C schematically depicts a forming machine used in the step of fabricating the receptacle according to an exemplary embodiment;

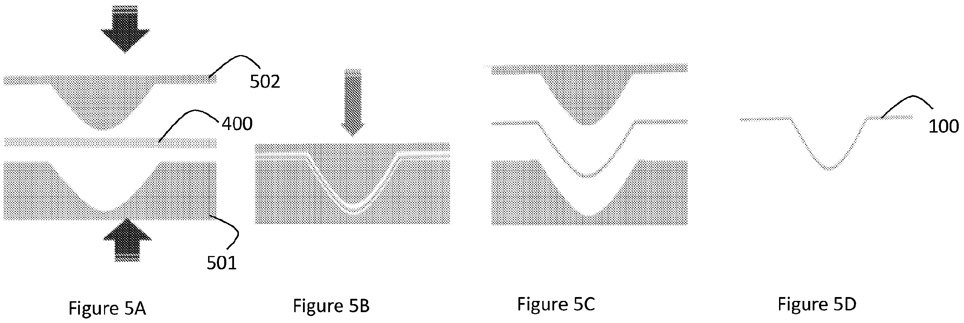

Figure 5A schematically depicts a forming machine used in the step of fabricating the receptacle according to an exemplary embodiment; and

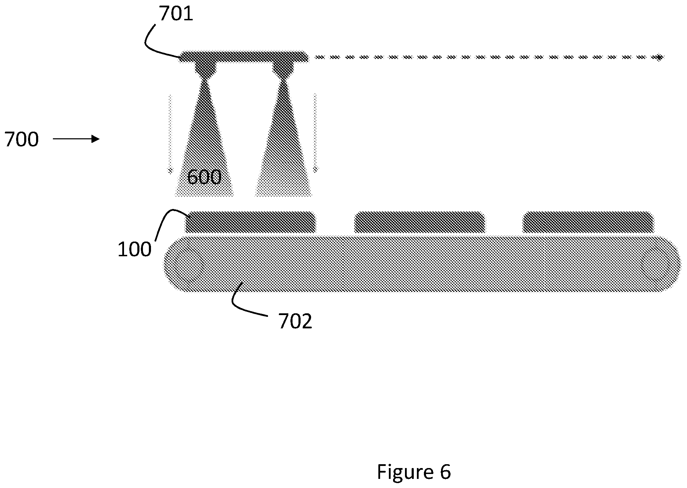

Figure 6 schematically depicts an apparatus for applying a coating to the receptacle according to an exemplary embodiment.

### DESCRIPTION OF EMBODIMENTS

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of', and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

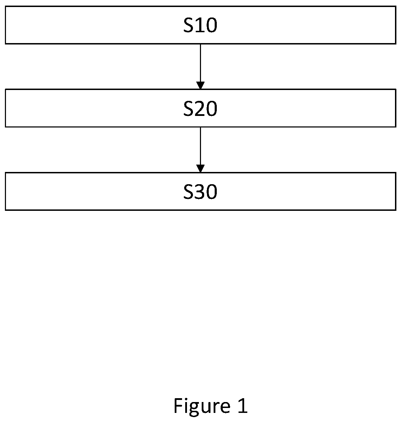

The food packaging comprises a receptacle and a coating. As schematically depicted in Figure 1, according to an exemplary embodiment a method of manufacturing the food packaging comprises a step S10 of fabricating the receptacle, a step S20 of applying the coating and a step S30 of drying the coating.

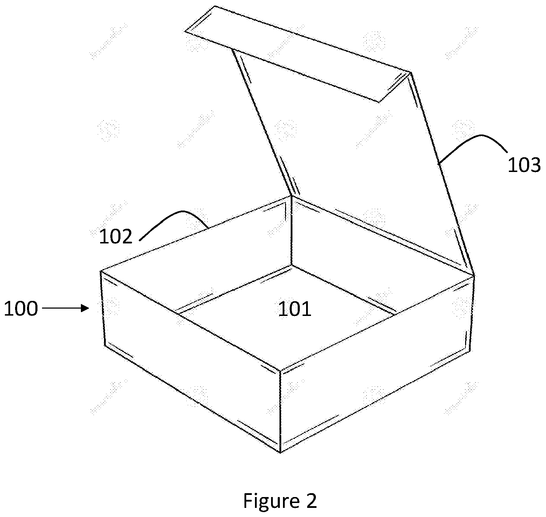

Figure 2 schematically depicts the receptacle 100 of the food packaging according to an exemplary embodiment. The receptacle 100 is, for example, a tray or generally container for food. Food includes liquids (e.g. soups), and the food packaging described herein may be used to contain beverages as well as solid foods. In one example, the receptacle 100 is a cup.

The receptacle 100, as shown in Figure 2, comprises a base 101 surrounded by walls 102 to contain contents (e.g. food) of the receptacle 100. The receptacle 100 shown in Figure 2 is cuboidal, but the receptacle 100 is not restricted to a particular geometry. The receptacle 100 of Figure 2 is shown with an integral lid 103, but the receptacle may be with or without a lid 103. In one example, the lid 103 is a screw cap.

The receptacle 100 may comprise formations, such as at least one trough or depression in the base 101, in which food is to be held. The receptacle 100 may comprise a plurality of such formations to separately contain, for instance, rice and a sauce. The food may be sealed in the depressions, for example, using a film or foil. The receptacle 100 may be configured to interlock (e.g. by geometrically complementary features) with another of the same receptacle 100 so that a plurality of the receptacles 100 can be easily transported and stored.

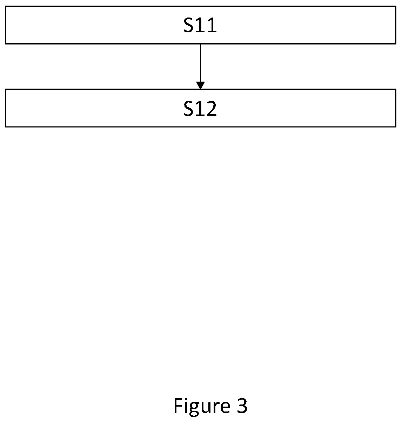

Figure 3 schematically depicts the step of fabricating S10 the receptacle 100 according to an exemplary embodiment. The step of fabricating S10 the receptacle 100 comprises a step S11 of processing raw materials and a step S12 of forming a final shape of the receptacle.

In the step S11 of processing the raw materials, the raw materials comprise a fibrous material, which is biodegradable, compostable and recyclable, such as wood, sugar cane by-product, cassava fibre, tapioca fibre, potato fibre or recycled materials. The raw materials also comprise a biopolymer, similarly biodegradable, compostable and recyclable, such as starch. The raw materials are also advantageously cheap and readily available.

In a first example of processing S11 the raw materials, the raw materials are provided in a mat, which is subsequently broken up into pieces (e.g. using a hammer mill) that are passed through rollers (e.g. on a conveyor) to form a web. The web is used to form a final shape of the receptacle 100. The web may be formed using any known method, such as a dry airlaid process or a wet-pulp manufacturing process. The dry airlaid process is preferable compared with a wet pulp manufacturing process, because less water is needed in the process and lower pressure is required in forming the final shape of the receptacle 100 (see below). By-products of the dry airlaid process, unlike those of wet processes, are reusable in the dry airlaid process and can, therefore, be recycled.

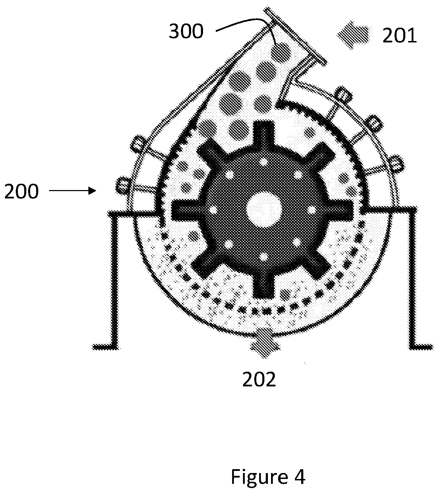

Figure 4 schematically depicts a hammer mill 200 for processing the raw materials 300 according to an exemplary embodiment. The raw materials 300 enter the hammer mill 200 via an inlet 201 and are broken into pieces by the hammer mill 200 to be collected at an outlet 202.

In a second example of processing S11 the raw materials, pellets of the respective raw materials are mixed together, the resulting mixture being used to form the final shape of the receptacle 100.

The fibrous material in combination with the biopolymer, such as starch, enable the receptacle 100 to withstand temperatures of up to 220°C while engendering rigidity of receptacle 100 and hence the food packaging. The receptacle 100 comprises no more than 40% by mass of the fibrous material, preferably no more than 20%.

Forming S12 the final shape of the receptacle 100 comprises using a forming machine to form the final shape of the receptacle 100 using the processed raw materials. Fabricating S10 the receptacle 100 is not limited to forming S12 the final shape of the receptacle 100 using a particular forming technique. Preferably, forming S12 the final shape of the receptacle 100 comprises thermoforming, because thermoforming does not require water. Forming S12 the final shape of the receptacle may comprise adding a small amount of adhesive to the proceed raw materials to improve binding of the processed raw materials. For example, the adhesive may be polylactic acid (PLA), which is biodegradable, compostable and recyclable.

Figures 5A to 5D schematically depict a forming machine according to an exemplary embodiment. In Figures 5A to 5D the forming machine uses a mould comprising male 502 and female parts 501 to form the final shape of the receptacle 100. In Figure 5A, the processed raw materials 400 are fed into the forming machine. Raw materials 300 processed according to the second example (pellet mixture) may be placed on sheet to be fed into the forming machine. The forming machine is heated to temperatures of 130°C - 180°C. In Figures 5B, the mould is applied to the processed raw materials 400 for a predetermined time period, typically 3s - 60s. In Figures 5C and 5D, the mould is unapplied to leave the receptacle 100 in its final shape.

The thickness of each of the base 101 and the walls 102 of the receptacle 100 formed in its final shape is typically 0.8 mm - 3 mm. Raw materials 300 processed according to the first example (web) and used for forming S12 the final shape of the receptacle 100 facilitate less time being required by the forming machine to form the final shape of the receptacle 100. Raw materials 300 processed according to the second example (pellet mixture) and used for forming S12 the final shape of the receptacle 100 facilitate forming a receptacle 100 with a thinner base 101 and walls 102.

Applying S20 the coating to the receptacle 100 comprises applying a sufficiently thick coating to impart the property of impermeability to the receptacle 100. A single layer of the coating is typically 5-25 microns in thickness but may be thicker for modified atmosphere packaging (e.g. food packaging for food on an aircraft). A thinner coating is advantageous because using less coating reduces costs associated with the coating itself, as well as the costs associated with transportation of the food packaging. The coating is a biopolymer Preferably, the coating is a plant-based synthetic biopolymer coating such as Galacryl^{®} water-based coatings (https://www.schmid-rhyner.com/fileadmin/Dateien/Dokumente/Broschueren/ SRAG_GALACRYL_WaterbasedCoating_EN.pdf)

The coating according to the invention is applied using a Twin Air Spray System.

The coating is sprayed onto the receptacle 100 using the apparatus 700 described below in relation to Figure 6.

Figure 6 schematically depicts an apparatus 700 for applying the coating to the receptacle 100 according to an exemplary embodiment. The apparatus 700 for applying the coating onto the food receptacle comprises a Twin Air Spray System (TASS) as described by granted European patent EP 3 313 582 B1. The TASS enables the coating to be applied sufficiently thinly with accuracy and repeatability. Current spray system technology is unable to apply coatings at a thickness of 5-25 microns with accuracy and repeatability. Accurate application of the coating is important in order that the weight of the food packaging can be consistently reproduced, for example, to meet requirements for transportation or so that food the food packaging can be used to package food sold by weight without the packaging having to be weighed each time.

Current spray systems have a single air supply that enters a spray gun of the spray system at the furthest point from the air cap. This single air supply is used to create an atomising pressure and a fan pattern of the coating during expulsion from the spray gun. In other words, in conventional spray systems creation of droplets of the coating expelled by the spray gun and distribution of these droplets is controlled using the same air supply such that the same pressure is supplied for atomisation and for distribution of the droplets.

Application of thinner coatings requires a very low air flow rate of the air supply. However, in conventional spray systems with a single air supply, as the air flow rate is reduced the atomising pressure is also reduced. Operators to try and balance (using what is termed a "half trigger movement") the air flow rate and atomising pressure to apply a thin layer of coating, but this approach is very inaccurate and does not engender repeatability of coating thickness or a high quality finish. For example, using a half trigger movement can create a mist hazard.

The TASS comprises separate air supplies for control of creation of the droplets of the coating and control of the distribution of the droplets. Thus, the TASS enables application of the coating at a thickness of 5 microns and upwards with accuracy and repeatability. Further, use of separate air supplies greatly reduces energy usage and significantly increases the transfer efficiency of the coating compared with conventional spray systems with a single air supply.

Using the apparatus 700 comprising the TASS, the coating 600 is preferably applied to the receptacle 100 while the receptacle 100 is static on a surface 702. Applying the coating 600 when the receptacle 100 is static enables the coating 600 to be applied more accurately than when the receptacle 100 is moving. If the surface 702 is a conveyor, sensors (e.g. laser sensors) are used to determine when movement of the conveyor should halt so that a given receptacle 100 is correctly positioned in front of a given spray gun 701 and to align nozzles of the spray guns 701 with the receptacle 100, in particular the internal surface of the receptacle 100. The coating 600 may be applied to the base 101 while the receptacle is moving 101. Once the spray gun 701 is aligned with the receptacle 100, the spray gun 701 is electronically activated by a solenoid. Conventionally, pneumatic cylinder operation is used to activate spray guns in spray systems, but instant activation of spray guns cannot be achieved by methods of pneumatic cylinder operation. Instant activation of the spray gun 701 enhances control of the thickness of the coating 600 applied and enables a quicker production rate.

The coating 600 is delivered to at least the internal surface of the receptacle 100. The coating 600 may also be delivered to the external surface of the receptacle 100. Each spray gun 701 is programmed to follow the internal profile of the receptacle 100, for example, by rotating at corners of the receptacle 100. Consequently, typically the nozzles are 360' nozzles.

Usually more than one layer of the coating 600 is applied. Typically, two layers of the coating 600 are applied, but more layers, for example three layers, may be applied for modified atmosphere packaging, each layer of the coating typically having a thickness of 5-25 microns. After each the application of each layer of coating 600, drying S30 may take place as described below. As indicated by the dashed arrow in Figure 6, the spray guns may move along a rail or the like to apply the coating 600 to a plurality of receptacles 100. Typically, the apparatus 700 comprises a plurality of spray guns 701, as described above, according to the desired production rate. Drying S30 the coating 600 comprises drying the coating using a dryer. Drying S30 the coating 600 comprises curing the coating using infrared or microwave radiation, for example. The dryer may comprise a temperature control unit, such as a heating unit or a cooling unit, so that the coated receptacle is heated or cooled. The temperature control unit may comprise fans. The dryer may be configured to control the length of time the coated receptacle is in the dryer. For instance, the dryer may comprise a drying conveyor whose speed is adjustable.

The dried coating 600 results in the receptacle being impermeable and exhibits barrier properties. Moreover, because the coating is biodegradable, compostable and recyclable, the food packaging comprising the receptacle 100 and coating 600 as described in entirely biodegradable, compostable and recyclable. The dried coating 600 is safe for contact with food.

The food packaging may be weighed and scanned for quality assurance, for example to check for the presence of foreign bodies.

## Claims

1. A method of manufacturing food packaging comprising a receptacle (100) of a final shape and a coating (600), the method comprising:
fabricating (S10) the receptacle (100) from raw materials, the raw materials comprising a fibrous material and a biopolymer, wherein forming (S12) the final shape of the receptacle (100) comprises thermoforming;
applying (S20) at least one layer of the coating (600) to the receptacle (100), the coating (600) comprising a biopolymer coating, wherein applying the at least one layer of the coating (600) comprises spraying the receptacle (100) using a Twin Air Spray System; and
drying (S30) the at least one layer of the coating (600).

2. The method of claim 1, wherein the fibrous material comprises at least one of wood, sugar cane by-product, cassava fibre, tapioca fibre, potato fibre and recycled materials

3. The method of any one of claims 1 to 2, wherein the receptacle (100) comprises no more than 40% by mass of the fibrous material.

4. The method of any one of claims 1 to 3, wherein the raw materials comprise starch as the biopolymer.

5. The method of any one of claims 1 to 4, wherein fabricating the receptacle (100) comprises:
processing (S11) the raw materials.

6. The method of any one of claims 1 to 5, wherein processing the raw materials comprises forming a web from the raw materials.

7. The method of any one of claims 1 to 5, wherein processing the raw materials comprises mixing pellets of the fibrous material and pellets of the biopolymer.

8. The method of any one of claims 1 to 7, wherein the biopolymer coating comprises a plant-based synthetic biopolymer.

9. The method of any one of claims 1 to 8, wherein drying the at least one layer of the coating (600) comprises curing the at least one layer of the coating (600).

10. Food packaging manufactured according to the method of claim any one of claims 1 to 9.

11. The food packaging of claim 10, wherein the receptacle (100) is a cup.

12. The food packaging of claim 11, wherein the receptacle (100) comprises a formation to hold food.

13. An apparatus (700) for manufacturing food packaging comprising a receptacle (100) of a final shape and a coating (600), the apparatus (700) comprising:
a forming machine to form the final shape of the receptacle (100) from raw materials comprising a fibrous material and a biopolymer. wherein the forming machine is configured to form the final shape of the receptacle (100) by thermoforming;
a spray system to apply at least one layer of the coating to the receptacle (100), the coating comprising a biopolymer coating, wherein the spray system is configured to apply the at least one layer of the coating (600) by spraying the receptacle (100) using a Twin Air Spray System; and
a dryer to dry the at least one layer of the coating (600).

## Patentansprüche

1. Verfahren zur Herstellung einer Lebensmittelverpackung, die ein Behältnis (100) einer Endform und eine Beschichtung (600) umfasst, wobei das Verfahren umfasst:
Herstellen (S10) des Behältnisses (100) aus Rohmaterialien, wobei die Rohmaterialien ein Fasermaterial und ein Biopolymer umfassen, wobei das Formen (S12) der Endform des Behältnisses (100) Thermoformen umfasst;
Aufbringen (S20) mindestens einer Schicht der Beschichtung (600) auf das Behältnis (100), wobei die Beschichtung (600) eine Biopolymerbeschichtung umfasst, wobei das Aufbringen der mindestens einen Schicht der Beschichtung (600) das Besprühen des Behältnisses (100) unter Verwendung eines Twin-Air-Spraysystems umfasst; und
Trocknen (S30) der mindestens einen Schicht der Beschichtung (600).

2. Verfahren gemäß Anspruch 1, wobei das Fasermaterial mindestens eines umfasst von Holz, Zuckerrohrnebenprodukt, Maniokfaser, Tapiokafaser, Kartoffelfaser und recycelte Materialien.

3. Verfahren gemäß einem der Ansprüche 1 bis 2, wobei das Behältnis (100) nicht mehr als 40 Masseprozent des Fasermaterials umfasst.

4. Verfahren gemäß einem der Ansprüche 1 bis 3, wobei die Rohstoffe Stärke als Biopolymer umfassen.

5. Verfahren gemäß einem der Ansprüche 1 bis 4, wobei das Herstellen des Behältnisses (100) umfasst:
Verarbeiten (S11) der Rohstoffe.

6. Verfahren gemäß einem der Ansprüche 1 bis 5, wobei das Verarbeiten der Rohmaterialien das Bilden einer Bahn aus den Rohmaterialien umfasst.

7. Verfahren gemäß einem der Ansprüche 1 bis 5, wobei das Verarbeiten der Rohmaterialien das Mischen von Pellets aus dem Fasermaterial und Pellets aus dem Biopolymer umfasst.

8. Verfahren gemäß einem der Ansprüche 1 bis 7, wobei die Biopolymerbeschichtung ein synthetisches Biopolymer auf Pflanzenbasis umfasst.

9. Verfahren gemäß einem der Ansprüche 1 bis 8, wobei das Trocknen der mindestens einen Schicht der Beschichtung (600) das Aushärten der mindestens einen Schicht der Beschichtung (600) umfasst.

10. Lebensmittelverpackung, das gemäß dem Verfahren gemäß einem der Ansprüche 1 bis 9 hergestellt wird.

11. Lebensmittelverpackung gemäß Anspruch 10, wobei das Behältnis (100) ein Becher ist.

12. Lebensmittelverpackung gemäß Anspruch 11, wobei das Behältnis (100) eine Ausbildung zum Aufnehmen von Lebensmitteln umfasst.

13. Vorrichtung (700) zum Herstellen einer Lebensmittelverpackung, umfassend ein Behältnis (100) mit einer Endform und eine Beschichtung (600), wobei die Vorrichtung (700) umfasst:
eine Formmaschine zum Formen der Endform des Behältnisses (100) aus Rohmaterialien, die ein Fasermaterial und ein Biopolymer umfassen, wobei die Formmaschine dazu ausgelegt ist, die Endform des Behältnisses (100) durch Thermoformen zu bilden;
ein Sprühsystem zum Aufbringen mindestens einer Schicht der Beschichtung auf das Behältnis (100), wobei die Beschichtung eine Biopolymerbeschichtung umfasst, wobei das Sprühsystem dazu ausgelegt ist, die mindestens eine Schicht der Beschichtung (600) durch Besprühen des Behältnisses (100) unter Verwendung eines Twin-Air-Spraysystems aufzubringen; und
einen Trockner zum Trocknen der mindestens einen Schicht der Beschichtung (600).

## Revendications

1. Procédé de fabrication d'un emballage alimentaire comprenant un réceptacle (100) d'une forme finale et un revêtement (600), le procédé comprenant :
la fabrication (S10) du réceptacle (100) à partir de matières premières, les matières premières comprenant un matériau fibreux et un biopolymère, la formation (S12) de la forme finale du réceptacle (100) comprenant le thermoformage ;
l'application (S20) d'au moins une couche du revêtement (600) sur le réceptacle (100), le revêtement (600) comprenant un revêtement biopolymère, l'application de l'au moins une couche du revêtement (600) comprenant la pulvérisation du réceptacle (100) à l'aide d'un système de pulvérisation à double air ; et
le séchage (S30) de l'au moins une couche du revêtement (600).

2. Procédé selon la revendication 1, le matériau fibreux comprenant au moins l'un des matériaux suivants : bois, sous-produit de canne à sucre, fibre de manioc, fibre de tapioca, fibre de pomme de terre et matériaux recyclés.

3. Procédé selon l'une quelconque des revendications 1 à 2, le réceptacle (100) ne comprenant pas plus de 40 % en masse de matériau fibreux.

4. Procédé selon l'une quelconque des revendications 1 à 3, les matières premières comprenant de l'amidon en tant que biopolymère.

5. Procédé selon l'une quelconque des revendications 1 à 4, la fabrication du réceptacle (100) comprenant : le traitement (S11) des matières premières.

6. Procédé selon l'une quelconque des revendications 1 à 5, le traitement des matières premières comprenant la formation d'une bande à partir des matières premières.

7. Procédé selon l'une quelconque des revendications 1 à 5, le traitement des matières premières comprenant le mélange de granulés du matériau fibreux et de granulés du biopolymère.

8. Procédé selon l'une quelconque des revendications 1 à 7, le revêtement de biopolymère comprenant un biopolymère synthétique à base de plantes.

9. Procédé selon l'une quelconque des revendications 1 à 8, le séchage de l'au moins une couche du revêtement (600) comprenant le durcissement de l'au moins une couche du revêtement (600).

10. Emballage alimentaire fabriqué selon le procédé selon l'une quelconque des revendications 1 à 9.

11. Emballage alimentaire selon la revendication 10, le réceptacle (100) étant un gobelet.

12. Emballage alimentaire selon la revendication 11, le réceptacle (100) comprenant une formation pour contenir des aliments.

13. Appareil (700) de fabrication d'un emballage alimentaire comprenant un réceptacle (100) d'une forme finale et un revêtement (600), l'appareil (700) comprenant :
une machine de formage pour former la forme finale du réceptacle (100) à partir de matières premières comprenant un matériau fibreux et un biopolymère, la machine de formage étant configurée pour former la forme finale du réceptacle (100) par thermoformage ;
un système de pulvérisation pour appliquer au moins une couche de revêtement au réceptacle (100), le revêtement comprenant un revêtement biopolymère, le système de pulvérisation étant configuré pour appliquer l'au moins une couche de revêtement (600) en pulvérisant le réceptacle (100) à l'aide d'un système de pulvérisation à double air ; et
un dispositif de séchage pour sécher l'au moins une couche du revêtement (600).
